# EUROPEAN PATENT APPLICATION

(11) **EP 4 578 710 A1**
(43) Date of publication of application: **02.07.2025**
(21) Application number: 24195001.3
(22) Date of filing: 16.08.2024
(51) Int. Cl.: B60L 50/64, B60L 53/66, G06F 13/40, H01C 1/022, H01C 1/14, H01M 10/42, H04L 12/40

(54) **HIGH-VOLTAGE CONTROL BOX**

(30) Priority: 25.12.2023 CN 202311806963; 25.12.2023 CN 202323551793 U
(71) Applicant: Microvast, Inc., Stafford, TX 77477 (US); Microvast Power Systems Co., Ltd., Huzhou, Zhejiang 313000 (CN)
(72) Inventor: JIAN, Lifen, Huzhou, 313000 (CN); XIAO, Ningqiang, Huzhou, 313000 (CN); ZHOU, Zhiyi, Huzhou, 313000 (CN); GE, Subing, Huzhou, 313000 (CN); SHEN, Yunfeng, Huzhou, 313000 (CN)
(74) Representative: Metida

(57) **Abstract**

A high-voltage control box includes a control box body, a terminal resistor, and a wiring assembly. A CAN bus and a battery management unit are provided inside the control box body. The CAN bus includes a high wire and a low wire, which are connected to the battery management unit. The terminal resistor is provided inside the control box body. The wiring assembly is installed on a wall of the control box body, and is connected to the high wire, the low wire and the terminal resistor. The terminal resistor is disconnected from the high wire and/or the low wire, and the wiring assembly is configured to be connected with an external electrical connector to enable the terminal resistor to be electrically connected with the high wire and the low wire through the wiring assembly and the external electrical connector.

## Description

### TECHNICAL FIELD

This application relates to the technical field of battery high-voltage control box, and in particular to a high-voltage control box.

### BACKGROUND

A high-voltage control box is a device that outputs and distributes electrical energy in a battery pack, so as to achieve the disconnection and protection of electrical equipment for the entire vehicle. The high-voltage control box is designed according to the needs of the entire vehicle and serves the entire vehicle. The high-voltage control box is provided with a CAN bus therein, and the CAN bus is usually used for communication for the entire vehicle.

In CAN bus communication, when the CAN bus interconnects multiple controllers for networking, according to the specifications, a terminal resistor with a resistance of 120 S2 needs to be connected at two ends of the CAN bus. The function of the terminal resistor is to absorb signal reflections and echoes to avoid signal reflections when impedance is discontinuous or mismatched. According to different usage requirements, some high-voltage control boxes do not need to be equipped with the terminal resistors, while other high-voltage control boxes need to be equipped with the terminal resistors. For the convenience of production, there is currently no terminal resistor preset inside the high-voltage control box. In the subsequent use process, when a terminal resistor needs to be connected to the CAN bus inside the high-voltage control box, the high-voltage control box needs to be disassembled and the wiring harness needs to be modified (for example, the high-voltage control box needs to be disassembled, then a terminal resistor is placed in the high-voltage control box and connected to the wiring harness, and then the high-voltage control box is assembled), which is time-consuming and laborious.

### SUMMARY

The object of the present application is to provide a high-voltage control box that adopts a compatible design and can simultaneously meet the usage requirements of both requiring and not requiring a terminal resistor, and when the terminal resistor is required to be connected in the future, there is no need to disassemble the control box body, thus making it easy to operate.

An embodiment of the present application provides a high-voltage control box, which includes a control box body, a terminal resistor, and a wiring assembly. A CAN bus and a battery management unit are provided inside the control box body. The CAN bus includes a high wire and a low wire, which are connected to the battery management unit. The terminal resistor is provided inside the control box body. The wiring assembly is installed on a wall of the control box body. The wiring assembly is connected to the high wire, the low wire and the terminal resistor. The terminal resistor is disconnected from the high wire and/or the low wire, and the wiring assembly is configured to be connected with an external electrical connector to enable the terminal resistor to be electrically connected with the high wire and the low wire.

In an achievable manner, the terminal resistor is located inside or outside the battery management unit.

In an achievable manner, two ends of the terminal resistor are connected to the wiring assembly.

In an achievable manner, the wiring assembly includes a wiring terminal unit configured to be connected with the external electrical connector, and the two ends of the terminal resistor are connected to the wiring terminal unit.

In an achievable manner, the wiring terminal unit includes a first wiring terminal, a second wiring terminal, a third wiring terminal, and a fourth wiring terminal. The third wiring terminal and the fourth wiring terminal are respectively connected to the two ends of the terminal resistor. The first wiring terminal is connected to the high wire, and the second wiring terminal is connected to the low wire. The first wiring terminal and the third wiring terminal are configured to be connected with one external electrical connector, while the second wiring terminal and the fourth wiring terminal are configured to be connected with another external electrical connector.

In an achievable manner, the external electrical connector includes a first electrical connector and a second electrical connector. The first wiring terminal and the third wiring terminal are configured to be connected with the first electrical connector, while the second wiring terminal and the fourth wiring terminal are configured to be connected with the second electrical connector;
when the terminal resistor is required to be electrically connected with the high wire and the low wire, two ends of the first electrical connector are respectively connected to the first wiring terminal and the third wiring terminal to enable one end of the terminal resistor to be electrically connected with the high wire through the third wiring terminal, the first electrical connector and the first wiring terminal, and two ends of the second electrical connector are respectively connected to the second wiring terminal and the fourth wiring terminal to enable the other end of the terminal resistor to be electrically connected with the low wire through the fourth wiring terminal, the second electrical connector and the second wiring terminal.

In an achievable manner, one end of the terminal resistor is connected to the wiring assembly, while the other end of the terminal resistor is connected to the high wire or the low wire.

In an achievable manner, the wiring assembly includes a wiring terminal unit configured to be connected with the external electrical connector, one end of the terminal resistor is connected to the wiring terminal unit, while the other end of the terminal resistor is connected to the high wire or the low wire.

In an achievable manner, the wiring terminal unit includes a first wiring terminal and a second wiring terminal. The first wiring terminal is connected to the high wire, one end of the terminal resistor is connected to the low wire, while the other end of the terminal resistor is connected to the second wiring terminal. The first wiring terminal and the second wiring terminal are configured to be connected with the external electrical connector;
when the terminal resistor is required to be electrically connected with the high wire, two ends of the external electrical connector are respectively connected to the first wiring terminal and the second wiring terminal to enable the terminal resistor to be electrically connected with the high wire through the second wiring terminal, the external electrical connector and the first wiring terminal.

In an achievable manner, the wiring terminal unit includes a first wiring terminal and a second wiring terminal. The first wiring terminal is connected to the low wire, one end of the terminal resistor is connected to the high wire, while the other end of the terminal resistor is connected to the second wiring terminal. The first wiring terminal and the second wiring terminal are configured to be connected with the external electrical connector;
when the terminal resistor is required to be electrically connected with the low wire, two ends of the external electrical connector are respectively connected to the first wiring terminal and the second wiring terminal to enable the terminal resistor to be electrically connected with the low wire through the second wiring terminal, the external electrical connector and the first wiring terminal.

In an achievable manner, the wiring assembly further includes a base, the base is installed on the wall of the control box body, and the wiring terminal unit is provided inside the base.

In an achievable manner, a portion of the base is located inside the control box body, and another portion extends outside the control box body; or, the base is located inside the control box body, and the base is installed on an inner wall of the control box body; or, the base is located outside the control box body, and the base is installed on an outer wall of the control box body.

In an achievable manner, the wiring assembly further includes a plug, the plug is located outside the control box body, and the base is a socket that is matched with and pluggable by the plug. The external electrical connector is installed on the plug, so that the external electrical connector is connected to the wiring terminal unit through the plug to enable the terminal resistor to be electrically connected with the high wire and the low wire.

In an achievable manner, the wiring assembly includes a wiring terminal unit, the wiring terminal unit includes a high wiring terminal and a low wiring terminal, wherein the high wire is connected to the high wiring terminal, and the low wire is connected to the low wiring terminal.

The high-voltage control box provided in the present application is preset with a terminal resistor inside the control box body, and a wiring assembly is installed on the wall of the control box. The wiring assembly is connected to the high wire, the low wire and the terminal resistor, while the terminal resistor is disconnected from the high wire and/or the low wire of the CAN bus. When there is no need to connect the terminal resistor between the high wire and the low wire of the CAN bus, it is not required to connect the external electrical connector to the wiring assembly. When the terminal resistor needs to be electrically connected between the high wire and the low wire of the CAN bus, the external electrical connector is connected to the wiring assembly from the outside of the control box body to enable the terminal resistor to be electrically connected with the high wire and the low wire, thus eliminating the need to disassemble the control box body and modify the internal wiring harness of the control box body, facilitating operation for users and saving labor costs, eliminating the need for welding broken wires, and reducing the number of fault points and increasing safety. The high-voltage control box adopts a compatible design, which can simultaneously meet the needs of both requiring the terminal resistor and not requiring the terminal resistor. There is no need to distinguish between high-voltage control boxes with and without the terminal resistor, thus reducing the variety of the control boxes, and increasing the versatility of the control boxes.

### BRIEF DESCRIPTION OF THE DRAWINGS

FIG. 1 is a structural diagram of a high-voltage control box in a first embodiment of the present application.
FIG. 2 is a schematic diagram of the three-dimensional structure of the high-voltage control box in the first embodiment of the present application.
FIG. 3 is a structural schematic diagram of FIG. 2 after removing the control box body.
FIG. 4 is a structural diagram of a high-voltage control box in a second embodiment of the present application.
FIG. 5 is a structural diagram of a high-voltage control box in a third embodiment of the present application.
FIG. 6 is a structural diagram of a high-voltage control box in a fourth embodiment of the present application.
FIG. 7 is a structural diagram of a high-voltage control box in a fifth embodiment of the present application.
FIG. 8 is a structural diagram of a high-voltage control box in a sixth embodiment of the present application.

In the figures: 1 - control box body, 10 - wall, 11 - main box body, 12 - box cover, 2 - CAN bus, 21 - high wire, 22 - low wire, 3 - battery management unit, 31 - housing, 32 - first lead-out interface, 33 - second lead-out interface, 34 - high lead-out interface, 35 - low lead-out interface, 4 - terminal resistor, 41 - internal wire, 5 - wiring assembly, 50 - wiring terminal unit, 51 - first wiring terminal, 52 - second wiring terminal, 53 - third wiring terminal, 54 - fourth wiring terminal, 55 - high wiring terminal, 56 - low wiring terminal, 5A - base, 5B - plug, 6 - external electrical connector, 61 - first electrical connector, 62 - second electrical connector.

### DETAILED DESCRIPTION OF THE EMBODIMENTS

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) in the specification and claims of the present application are defined based on the position of the structure in the figures and the position between the structures in the figures, only for the clarity and convenience of expressing the technical solution. It should be understood that the use of these directional words should not limit the scope of protection in the present application.

### First embodiment

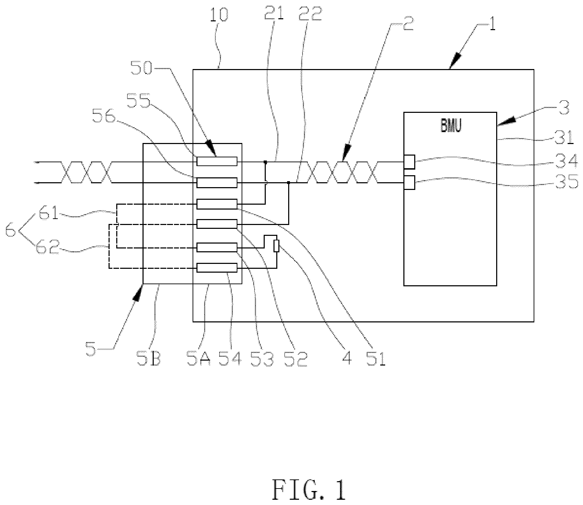

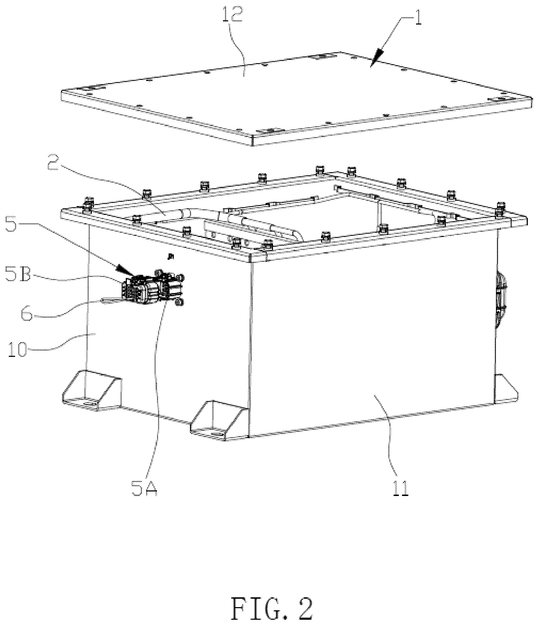

As shown in FIGS. 1 to 3, the high-voltage control box provided in the first embodiment of the present application includes a control box body 1, a terminal resistor 4, and a wiring assembly 5. A CAN bus 2 and a battery management unit 3 (i.e., BMU) are provided inside the control box body 1. The CAN bus 2 includes a high wire 21 (i.e., high-level wire) and a low wire 22 (i.e., low-level wire), which are connected to the battery management unit 3. The terminal resistor 4 is provided inside the control box body 1. The wiring assembly 5 is installed on a wall 10 of the control box body 1. The wiring assembly 5 is connected to the high wire 21, the low wire 22 and the terminal resistor 4, while the terminal resistor 4 is disconnected from the high wire 21 and/or the low wire 22 (i.e., the terminal resistor 4 is disconnected from at least one of the high wire 21 and the low wire 22). The wiring assembly 5 is used to connect with an external electrical connector 6 to enable the terminal resistor 4 to be electrically connected with the high wire 21 and the low wire 22 through the wiring assembly 5 and the external electrical connector 6. That is, in this embodiment, before connecting the external electrical connector 6 to the wiring assembly 5, the terminal resistor 4 is disconnected from the high wire 21 and the low wire 22; after connecting the external electrical connector 6 to the wiring assembly 5, two ends of the terminal resistor 4 are electrically connected to the high wire 21 and the low wire 22 respectively through the wiring assembly 5 and the external electrical connector 6, so that the terminal resistor 4 is connected in parallel between the high wire 21 and the low wire 22.

Specifically, the high-voltage control box provided in the embodiment is preset with a terminal resistor 4 inside the control box body 1, and a wiring assembly 5 is installed on the wall 10 of the control box body 1. The wiring assembly 5 is connected to the high wire 21, the low wire 22 and the terminal resistor 4, while the terminal resistor 4 is disconnected from the high wire 21 and/or the low wire 22 of the CAN bus 2. When there is no need to connect the terminal resistor 4 between the high wire 21 and the low wire 22 of the CAN bus 2, it is not required to connect the external electrical connector 6 to the wiring assembly 5. When the terminal resistor 4 needs to be electrically connected between the high wire 21 and the low wire 22 of the CAN bus 2, the external electrical connector 6 is connected to the wiring assembly 5 from the outside of the control box body 1 to enable the terminal resistor 4 to be electrically connected with the high wire 21 and the low wire 22, thus eliminating the need to disassemble the control box body 1 and modify the internal wiring harness of the control box body 1, facilitating operation for users and saving labor costs, eliminating the need for welding broken wires, and reducing the number of fault points and increasing safety. The high-voltage control box adopts a compatible design, which can simultaneously meet the needs of both requiring the terminal resistor 4 and not requiring the terminal resistor 4. There is no need to distinguish between high-voltage control boxes with and without the terminal resistor, thus reducing the variety of the control boxes, and increasing the versatility of the control boxes.

In an achievable manner, the terminal resistor 4 is located outside the battery management unit 3, which can facilitate the connection between the terminal resistor 4 and the wiring assembly 5. Of course, in other embodiments, the terminal resistor 4 can also be located inside the battery management unit 3.

In an achievable manner, the external electrical connector 6 can be in the form of external cables, or other form of connectors.

As shown in FIG. 1, in an achievable manner, the two ends of the terminal resistor 4 are connected to the wiring assembly 5, that is, the terminal resistor 4 is not directly connected to the high wire 21 and the low wire 22, so that when conducting, the two ends of the terminal resistor 4 are respectively connected to the high wire 21 and the low wire 22 through the wiring assembly 5 and the external electrical connector 6. Of course, in other embodiments, one end of the terminal resistor 4 can be connected to the wiring assembly 5, while the other end of the terminal resistor 4 can be directly connected to the high wire 21 or the low wire 22, so that when conducting, one end of the terminal resistor 4 is directly connected to one of the high wire 21 and the low wire 22, while the other end of the terminal resistor 4 is connected to the other of the high wire 21 and the low wire 22 through the wiring assembly 5 and the external electrical connector 6.

As shown in FIG. 1, in an achievable manner, the wiring assembly 5 includes a wiring terminal unit 50. The wiring terminal unit 50 is used to connect with the external electrical connector 6. Specifically, the wiring terminal unit 50 can be directly connected to the external electrical connector 6 or indirectly connected to the external electrical connector 6. In this embodiment, the two ends of the terminal resistor 4 are both connected to the wiring terminal unit 50. Of course, in other embodiments, one end of the terminal resistor 4 can be connected to the wiring terminal unit 50, while the other end of the terminal resistor 4 can be directly connected to the high wire 21 or the low wire 22.

As shown in FIG. 1, in an achievable manner, the wiring terminal unit 50 includes a first wiring terminal 51, a second wiring terminal 52, a third wiring terminal 53, and a fourth wiring terminal 54. The third wiring terminal 53 and the fourth wiring terminal 54 are respectively connected to the two ends of the terminal resistor 4. The first wiring terminal 51 is connected to the high wire 21, and the second wiring terminal 52 is connected to the low wire 22. The first wiring terminal 51 and the third wiring terminal 53 are used to connect with one external electrical connector 6, while the second wiring terminal 52 and the fourth wiring terminal 54 are used to connect with another external electrical connector 6 (that is, the first wiring terminal 51 and the third wiring terminal 53, as well as the second wiring terminal 52 and the fourth wiring terminal 54, are used to connect with different external electrical connectors 6) to enable the terminal resistor 4 to be electrically connected with the high wire 21 and the low wire 22.

Specifically, in this embodiment, the external electrical connector 6 include a first electrical connector 61 and a second electrical connector 62. The first wiring terminal 51 and the third wiring terminal 53 are used to connect with the first electrical connector 61, while the second wiring terminal 52 and the fourth wiring terminal 54 are used to connect with the second electrical connector 62. When the terminal resistor 4 is required to be electrically connected with the high wire 21 and the low wire 22, two ends of the first electrical connector 61 are respectively connected to the first wiring terminal 51 and the third wiring terminal 53 to enable one end of the terminal resistor 4 to be electrically connected with the high wire 21 through the third wiring terminal 53, the first electrical connector 61 and the first wiring terminal 51, and two ends of the second electrical connector 62 are respectively connected to the second wiring terminal 52 and the fourth wiring terminal 54 to enable the other end of the terminal resistor 4 to be electrically connected with the low wire 22 through the fourth wiring terminal 54, the second electrical connector 62 and the second wiring terminal 52, finally allowing the terminal resistor 4 to be electrically connected with both the high wire 21 and the low wire 22. Specifically, the first electrical connector 61 can be directly or indirectly connected to the first wiring terminal 51 and the third wiring terminal 53, and the second electrical connector 62 can be directly or indirectly connected to the second wiring terminal 52 and the fourth wiring terminal 54.

As shown in FIGS. 1 to 3, in an achievable manner, the wiring assembly 5 further includes a base 5A, and the base 5A is installed on the wall 10 of the control box body 1. The wiring terminal unit 50 is provided inside the base 5A, that is, the first wiring terminal 51, the second wiring terminal 52, the third wiring terminal 53 and the fourth wiring terminal 54 are all arranged inside the base 5A. The base 5A plays a role in carrying the wiring terminal unit 50. A portion of the base 5A is located inside the control box body 1, while another portion of the base 5A extends outside the control box body 1. Of course, in other embodiments, the base 5A can also be completely located inside the control box body 1, and the base 5A is installed on an inner wall of the control box body 1; alternatively, the base 5A can also be completely located outside the control box body 1, and the base 5A is installed on an outer wall of the control box body 1.

As shown in FIGS. 1 to 3, in an achievable manner, the wiring assembly 5 further includes a plug 5B, and the plug 5B is located outside the control box body 1. The base 5A is a socket that is matched with and pluggable by the plug 5B. The external electrical connector 6 is installed on the plug 5B, so that the external electrical connector 6 is connected to the wiring terminal unit 50 through the plug 5B (i.e., there are wiring terminals inside the plug 5B that are used to connect with the wiring terminal unit 50, and the external electrical connector 6 is connected to the wiring terminals provided inside the plug 5B). When in use, the external electrical connector 6 can be installed on the plug 5B first, and then the plug 5B is plugged into the base 5A, thus enabling the terminal resistor 4 to be electrically connected with the high wire 21 and the low wire 22. It is convenient for the user to operate if the plug 5B is provided. Of course, in other embodiments, it is also possible to directly connect the external electrical connector 6 to the wiring terminal unit 50 without using the plug 5B.

As shown in FIG. 1, in an achievable manner, the wiring terminal unit 50 further includes a high wiring terminal 55 and a low wiring terminal 56. The high wire 21 is connected to the high wiring terminal 55, and the low wire 22 is connected to the low wiring terminal 56. The high wiring terminal 55 and the low wiring terminal 56 are used to connect with external cables, thereby leading the high wire 21 and the low wire 22 out of the control box body 1.

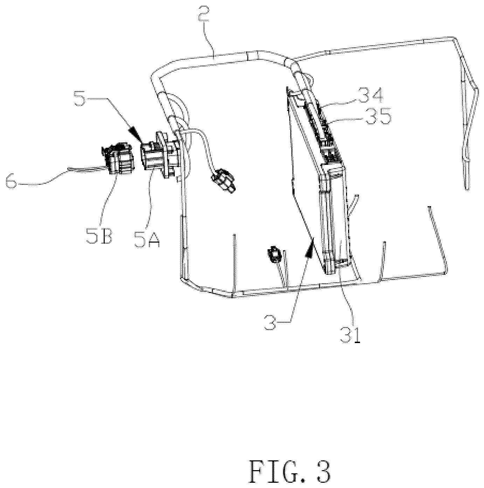

As shown in FIGS. 1 and 3, in an achievable manner, the battery management unit 3 includes a housing 31 and circuits (not shown) provided inside the housing 31. The circuits are connected to the high wire 21 and the low wire 22 of the CAN bus 2. The terminal resistor 4 is located outside the housing 31. The wall of the shell 31 is provided with a high lead-out interface 34 and a low lead-out interface 35. The high lead-out interface 34 and the low lead-out interface 35 are connected to the circuits in battery management unit 3. The high wire 21 and the low wire 22 are respectively connected to the high lead-out interface 34 and the low lead-out interface 35, to facilitate the electrical connection between the CAN bus 2 and the battery management unit 3.

In an achievable manner, the wiring terminals in the wiring terminal unit 50 and the lead-out interfaces on the battery management unit 3 can be in the form of terminals, pins (such as empty pins), connectors, interfaces, or other structural forms.

As shown in FIGS. 1 to 3, in an achievable manner, the control box body 1 includes a main box body 11 and a box cover 12. The CAN bus 2 and the battery management unit 3 are provided inside the main box body 11, and the wiring assembly 5 is installed on a side wall of the main box body 11. The top of the main box body 11 is provided with an opening (not labelled), and the box cover 12 is disposed at the opening and seals the opening. Of course, in other embodiments, the wiring assembly 5 can also be installed on the box cover 12.

In an achievable manner, the terminal resistor 4 is a resistor with a resistance of 120 Ω.

The high-voltage control box provided in the embodiments of the present application is preset with a terminal resistor 4 inside the control box body 1, and a wiring assembly 5 is installed on the wall 10 of the control box body 1. The wiring assembly 5 is connected to the high wire 21, the low wire 22 and the terminal resistor 4, while the terminal resistor 4 is disconnected from the high wire 21 and/or the low wire 22 of the CAN bus 2. When there is no need to connect the terminal resistor 4 between the high wire 21 and the low wire 22 of the CAN bus 2, it is not required to connect the external electrical connector 6 to the wiring assembly 5. When the terminal resistor 4 needs to be electrically connected between the high wire 21 and the low wire 22 of the CAN bus 2, the external electrical connector 6 is connected to the wiring assembly 5 from the outside of the control box body 1 to enable the terminal resistor 4 to be electrically connected with the high wire 21 and the low wire 22, thus eliminating the need to disassemble the control box body 1 and modify the internal wiring harness of the control box body 1, facilitating operation for users and saving labor costs, eliminating the need for welding broken wires, and reducing the number of fault points and increasing safety. In addition, the terminal resistor 4 is located outside the battery management unit 3, which can facilitate the connection between the terminal resistor 4 and the wiring assembly 5. The high-voltage control box adopts a compatible design, which can simultaneously meet the needs of both requiring the terminal resistor 4 and not requiring the terminal resistor 4. There is no need to distinguish between high-voltage control boxes with and without the terminal resistor, thus reducing the variety of the control boxes, and increasing the versatility of the control boxes.

### Second embodiment

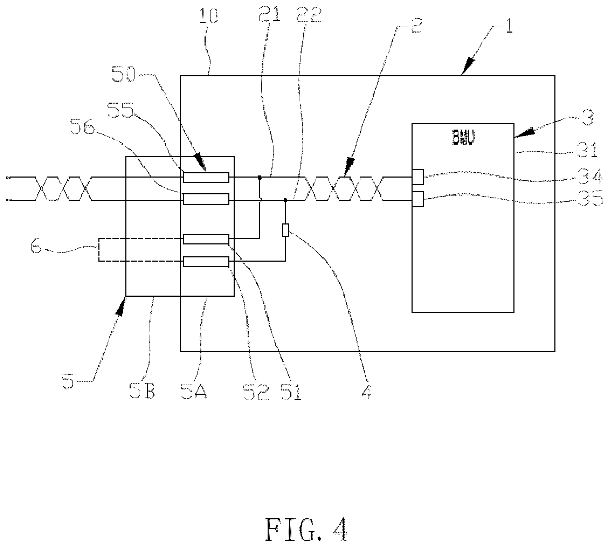

As shown in FIG. 4, the high-voltage control box provided in the second embodiment of the present application is basically the same as the first embodiment, with the differences in the structure of the wiring terminal unit 50 and the wiring method of the terminal resistor 4.

In this embodiment, one end of the terminal resistor 4 is connected to the wiring terminal unit 50, while the other end of the terminal resistor 4 is connected to the low wire 22. Specifically, the wiring terminal unit 50 includes a first wiring terminal 51 and a second wiring terminal 52. The first wiring terminal 51 is connected to the high wire 21, one end of the terminal resistor 4 is connected to the low wire 22, while the other end of the terminal resistor 4 is connected to the second wiring terminal 52. The first wiring terminal 51 and the second wiring terminal 52 are used to connect with the external electrical connector 6. When the terminal resistor 4 is required to be electrically connected with the high wire 21, two ends of the external electrical connector 6 are respectively connected to the first wiring terminal 51 and the second wiring terminal 52 to enable the terminal resistor 4 to be electrically connected with the high wire 21 through the second wiring terminal 52, the external electrical connector 6 and the first wiring terminal 51, finally allowing the terminal resistor 4 to be electrically connected with both the high wire 21 and the low wire 22. In this embodiment, when conducting, only one external electrical connector 6 needs to be connected to the wiring terminal unit 50, in order to enable the terminal resistor 4 to be electrically connected with the high wire 21 and the low wire 22. Compared to the first embodiment, it is more convenient to operate and saves material costs. It is noted that in the first embodiment, two external electrical connectors 6 are required to be connected to the wiring terminal unit 50, in order to enable the terminal resistor 4 to be electrically connected with the high wire 21 and the low wire 22.

In an achievable manner, one end of the terminal resistor 4 can be connected to the low wire 22 by welding.

The other structures and principles of this embodiment are the same or similar to the first embodiment, and will not be repeated here.

### Third Embodiment

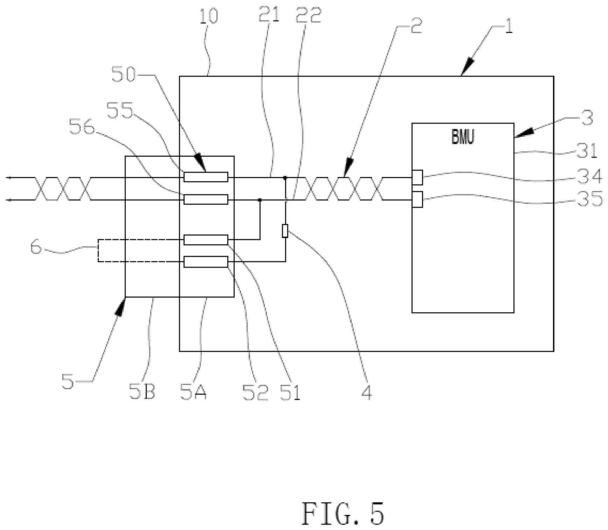

As shown in FIG. 5, the high-voltage control box provided in the third embodiment of the present application is basically the same as that in the second embodiment, with the differences in the wiring method of the terminal resistor 4.

In this embodiment, one end of the terminal resistor 4 is connected to the wiring terminal unit 50, while the other end of the terminal resistor 4 is connected to the high wire 21. Specifically, the wiring terminal unit 50 includes a first wiring terminal 51 and a second wiring terminal 52. The first wiring terminal 51 is connected to the low wire 22, one end of the terminal resistor 4 is connected to the high wire 21, while the other end of the terminal resistor 4 is connected to the second wiring terminal 52. The first wiring terminal 51 and the second wiring terminal 52 are used to connect with the external electrical connector 6. When the terminal resistor 4 is required to be electrically connected with the low wire 22, two ends of the external electrical connector 6 are respectively connected to the first wiring terminal 51 and the second wiring terminal 52 to enable the terminal resistor 4 to be electrically connected with the low wire 22 through the second wiring terminal 52, the external electrical connector 6 and the first wiring terminal 51, finally allowing the terminal resistor 4 to be electrically connected with both the high wire 21 and the low wire 22. In this embodiment, when conducting, only one external electrical connector 6 needs to be connected to the wiring terminal unit 50, in order to enable the terminal resistor 4 to be electrically connected with the high wire 21 and the low wire 22.

In an achievable manner, one end of the terminal resistor 4 can be connected to the high wire 21 by welding.

The other structures and principles of this embodiment are the same or similar to the second embodiment, and will not be repeated here.

### Fourth embodiment

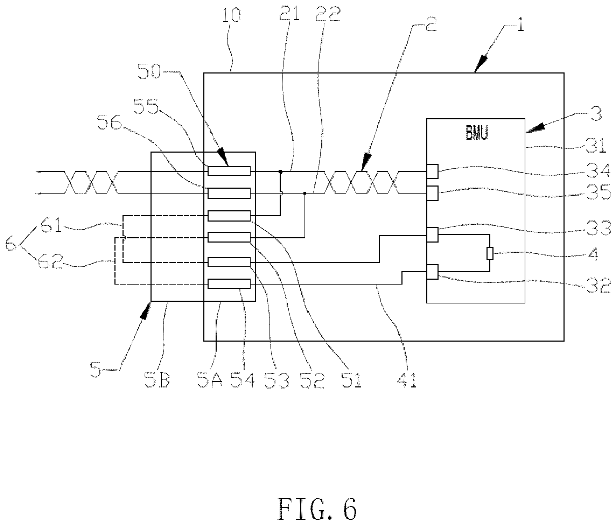

As shown in FIG. 6, the high-voltage control box provided in the fourth embodiment of the present application is basically the same as the first embodiment, with the differences set forth below.

In this embodiment, the terminal resistor 4 is located inside the battery management unit 3. The terminal resistor 4 does not affect the internal circuit structure of the battery management unit 3. By setting the terminal resistor 4 inside the battery management unit 3, the terminal resistor 4 is integrated with the battery management unit 3 for convenient assembly and production. It is also convenient for the spatial layout of the high-voltage control box.

In an achievable manner, the wiring terminal unit 50 includes a first wiring terminal 51, a second wiring terminal 52, a third wiring terminal 53, and a fourth wiring terminal 54. The third wiring terminal 53 and the fourth wiring terminal 54 are respectively connected to the two ends of the terminal resistor 4. The first wiring terminal 51 is connected to the high wire 21, and the second wiring terminal 52 is connected to the low wire 22. The first wiring terminal 51 and the third wiring terminal 53 are used to connect with one external electrical connector 6, while the second wiring terminal 52 and the fourth wiring terminal 54 are used to connect with another external electrical connector 6 (that is, the first wiring terminal 51 and the third wiring terminal 53, as well as the second wiring terminal 52 and the fourth wiring terminal 54, are used to connect with different external electrical connectors 6) to enable the terminal resistor 4 to be electrically connected with the high wire 21 and the low wire 22.

In an achievable manner, the battery management unit 3 includes a housing 31 and circuits (not shown) provided inside the housing 31. The circuits are connected to the high wire 21 and the low wire 22 of the CAN bus 2 through the high lead-out interface 34 and the low lead-out interface 35. The wall of the shell 31 is further provided with a first lead-out interface 32 and a second lead-out interface 33. The terminal resistor 4 is located inside the housing 31. Two ends of the terminal resistor 4 are respectively connected to the first lead-out interface 32 and the second lead-out interface 33. The first lead-out interface 32 and the second lead-out interface 33 are both connected to the wiring assembly 5. Specifically, the first lead-out interface 32 and the second lead-out interface 33 are respectively connected to the fourth wiring terminal 54 and the third wiring terminal 53 in the wiring assembly 50 through internal wires 41. By providing lead-out interfaces on the housing 31 of the battery management unit 3, it is convenient to connect the terminal resistor 4 to the wiring assembly 5.

The other structures and principles of this embodiment are the same or similar to the first embodiment, and will not be repeated here.

### Fifth embodiment

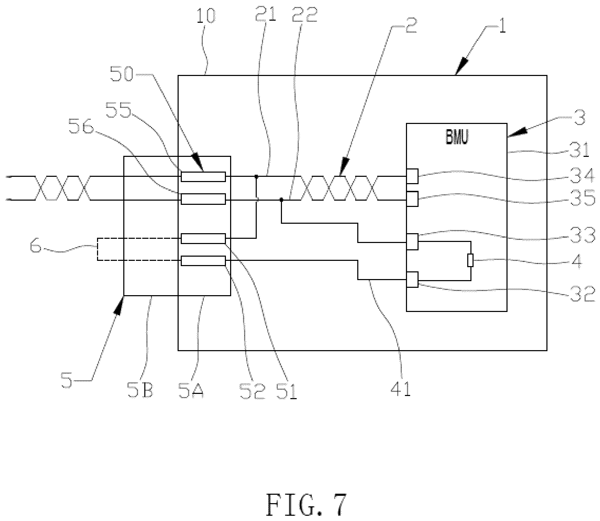

As shown in FIG. 7, the high-voltage control box provided in the fifth embodiment of the present application is basically the same as the fourth embodiment, with the differences in the structure of the wiring terminal unit 50 and the wiring method of the terminal resistor 4.

In this embodiment, one end of the terminal resistor 4 is connected to the wiring terminal unit 50, while the other end of the terminal resistor 4 is connected to the low wire 22. Specifically, the wiring terminal unit 50 includes a first wiring terminal 51 and a second wiring terminal 52. The first wiring terminal 51 is connected to the high wire 21, one end of the terminal resistor 4 is connected to the low wire 22 through the second lead-out interface 33, while the other end of the terminal resistor 4 is connected to the second wiring terminal 52 through the first lead-out interface 32. The first wiring terminal 51 and the second wiring terminal 52 are used to connect with an external electrical connector 6. When the terminal resistor 4 is required to be electrically connected with the high wire 21, two ends of the external electrical connector 6 are respectively connected to the first wiring terminal 51 and the second wiring terminal 52 to enable the terminal resistor 4 to be electrically connected with the high wire 21 through the second wiring terminal 52, the external electrical connector 6 and the first wiring terminal 51, finally allowing the terminal resistor 4 to be electrically connected with both the high wire 21 and the low wire 22. In this embodiment, when conducting, only one external electrical connector 6 needs to be connected to the wiring terminal unit 50, in order to enable the terminal resistor 4 to be electrically connected with the high wire 21 and the low wire 22. Compared to the fourth embodiment, it is more convenient to operate and saves material costs. It is noted that in the fourth embodiment, two external electrical connectors 6 are required to be connected to the wiring terminal unit 50, in order to enable the terminal resistor 4 to be electrically connected with the high wire 21 and the low wire 22.

The other structures and principles of this embodiment are the same or similar to the fourth embodiment, and will not be repeated here.

### Sixth Embodiment

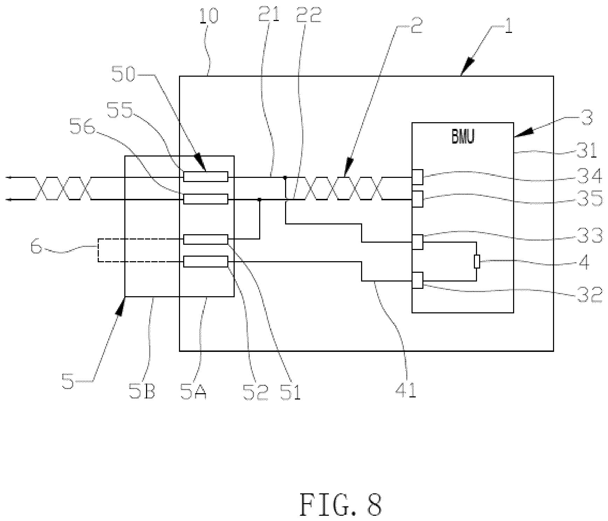

As shown in FIG. 8, the high-voltage control box provided in the sixth embodiment of the present application is basically the same as that in the fifth embodiment, with the differences in the wiring method of the terminal resistor 4.

In this embodiment, one end of the terminal resistor 4 is connected to the wiring terminal unit 50, while the other end of the terminal resistor 4 is connected to the high wire 21. Specifically, the wiring terminal unit 50 includes a first wiring terminal 51 and a second wiring terminal 52. The first wiring terminal 51 is connected to the low wire 22, one end of the terminal resistor 4 is connected to the high wire 21 through the second lead-out interface 33, while the other end of the terminal resistor 4 is connected to the second wiring terminal 52 through the first lead-out interface 32. The first wiring terminal 51 and the second wiring terminal 52 are used to connect with an external electrical connector 6. When the terminal resistor 4 is required to be electrically connected with the low wire 22, two ends of the external electrical connector 6 are respectively connected to the first wiring terminal 51 and the second wiring terminal 52 to enable the terminal resistor 4 to be electrically connected with the low wire 22 through the second wiring terminal 52, the external electrical connector 6 and the first wiring terminal 51, finally allowing the terminal resistor 4 to be electrically connected with both the high wire 21 and the low wire 22. In this embodiment, when conducting, only one external electrical connector 6 needs to be connected to the wiring terminal unit 50, in order to enable the terminal resistor 4 to be electrically connected with the high wire 21 and the low wire 22.

The other structures and principles of this embodiment are the same or similar to the fifth embodiment, and will not be repeated here.

The above are only the specific embodiments of the present application, but the scope of protection of the present application is not limited to this. Any technical personnel familiar with this technical field who can easily think of changes or replacements within the scope of technology disclosed in the present application should be covered within the scope of protection of the present application. Therefore, the protection scope of the present application should be based on the protection scope of the claims.

## Claims

1. A high-voltage control box comprising a control box body, a terminal resistor, and a wiring assembly, wherein a CAN bus and a battery management unit are provided inside the control box body, the CAN bus comprises a high wire and a low wire, which are connected to the battery management unit; the terminal resistor is provided inside the control box body; the wiring assembly is installed on a wall of the control box body, and the wiring assembly is connected to the high wire, the low wire and the terminal resistor; the terminal resistor is disconnected from the high wire and/or the low wire, and the wiring assembly is configured to be connected with an external electrical connector to enable the terminal resistor to be electrically connected with the high wire and the low wire.

2. The high-voltage control box as claimed in claim **1,** wherein the terminal resistor is located inside or outside the battery management unit.

3. The high-voltage control box as claimed in claim **1,** wherein two ends of the terminal resistor are connected to the wiring assembly.

4. The high-voltage control box as claimed in claim **3,** wherein the wiring assembly comprises a wiring terminal unit configured to be connected with the external electrical connector, and the two ends of the terminal resistor are connected to the wiring terminal unit.

5. The high-voltage control box as claimed in claim **4,** wherein the wiring terminal unit comprises a first wiring terminal, a second wiring terminal, a third wiring terminal, and a fourth wiring terminal, wherein the third wiring terminal and the fourth wiring terminal are respectively connected to the two ends of the terminal resistor, the first wiring terminal is connected to the high wire, and the second wiring terminal is connected to the low wire; the first wiring terminal and the third wiring terminal are configured to be connected with one external electrical connector, while the second wiring terminal and the fourth wiring terminal are configured to be connected with another external electrical connector.

6. The high-voltage control box as claimed in claim **5,** wherein the external electrical connector comprises a first electrical connector and a second electrical connector, wherein the first wiring terminal and the third wiring terminal are configured to be connected with the first electrical connector, while the second wiring terminal and the fourth wiring terminal are configured to be connected with the second electrical connector;
when the terminal resistor is required to be electrically connected with the high wire and the low wire, two ends of the first electrical connector are respectively connected to the first wiring terminal and the third wiring terminal to enable one end of the terminal resistor to be electrically connected with the high wire through the third wiring terminal, the first electrical connector and the first wiring terminal, and two ends of the second electrical connector are respectively connected to the second wiring terminal and the fourth wiring terminal to enable the other end of the terminal resistor to be electrically connected with the low wire through the fourth wiring terminal, the second electrical connector and the second wiring terminal.

7. The high-voltage control box as claimed in claim **1,** wherein one end of the terminal resistor is connected to the wiring assembly, while the other end of the terminal resistor is connected to the high wire or the low wire.

8. The high-voltage control box as claimed in claim **7,** wherein the wiring assembly comprises a wiring terminal unit configured to be connected with the external electrical connector, one end of the terminal resistor is connected to the wiring terminal unit, while the other end of the terminal resistor is connected to the high wire or the low wire.

9. The high-voltage control box as claimed in claim **8,** wherein the wiring terminal unit comprises a first wiring terminal and a second wiring terminal, the first wiring terminal is connected to the high wire, one end of the terminal resistor is connected to the low wire, while the other end of the terminal resistor is connected to the second wiring terminal; the first wiring terminal and the second wiring terminal are configured to be connected with the external electrical connector;
when the terminal resistor is required to be electrically connected with the high wire, two ends of the external electrical connector are respectively connected to the first wiring terminal and the second wiring terminal to enable the terminal resistor to be electrically connected with the high wire through the second wiring terminal, the external electrical connector and the first wiring terminal.

10. The high-voltage control box as claimed in claim **8,** wherein the wiring terminal unit comprises a first wiring terminal and a second wiring terminal, the first wiring terminal is connected to the low wire, one end of the terminal resistor is connected to the high wire, while the other end of the terminal resistor is connected to the second wiring terminal; the first wiring terminal and the second wiring terminal are configured to be connected with the external electrical connector;
when the terminal resistor is required to be electrically connected with the low wire, two ends of the external electrical connector are respectively connected to the first wiring terminal and the second wiring terminal to enable the terminal resistor to be electrically connected with the low wire through the second wiring terminal, the external electrical connector and the first wiring terminal.

11. The high-voltage control box as claimed in claim **4** or **8,** wherein the wiring assembly further comprises a base, the base is installed on the wall of the control box body, and the wiring terminal unit is provided inside the base.

12. The high-voltage control box as claimed in claim **11,** wherein a portion of the base is located inside the control box body, and another portion extends outside the control box body; or, the base is located inside the control box body, and the base is installed on an inner wall of the control box body; or, the base is located outside the control box body, and the base is installed on an outer wall of the control box body.

13. The high-voltage control box as claimed in claim **11,** wherein the wiring assembly further comprises a plug, the plug is located outside the control box body, the base is a socket that is matched with and pluggable by the plug; the external electrical connector is installed on the plug, so that the external electrical connector is connected to the wiring terminal unit through the plug to enable the terminal resistor to be electrically connected with the high wire and the low wire.
